**Europäisches Patentamt**

**European Patent Office**

**Office européen des brevets**

(19)

(11) Numéro de publication: **0 045 707**
**A1**

(12) ## DEMANDE DE BREVET EUROPEEN

(21) Numéro de dépôt: **81420111.7**

(22) Date de dépôt: **23.07.81**

(51) Int. Cl.³: **F 02 M 37/22**
**F 02 M 31/12, B 01 D 35/18**

(30) Priorité: **24.07.80 FR 8016629**

(43) Date de publication de la demande:
**10.02.82 Bulletin 82/6**

(84) Etats contractants désignés:
**AT BE CH DE GB IT LI NL SE**

(71) Demandeur: **Diry, André**
**Lieudit en Boussoy**
**F-71640 Saint Martin sous Montaigu(FR)**

(72) Inventeur: **Diry, André**
**Lieudit en Boussoy**
**F-71640 Saint Martin sous Montaigu(FR)**

(74) Mandataire: **Maisonnier, Jean**
**28 rue Servient**
**F-69003 Lyon(FR)**

(54) **Filtre pour le filtrage et le rechauffage simultanés du carburant.**

(57) L'invention concerne un filtre pour le filtrage et le réchauffage simultanés du carburant injecté dans un moteur à combustion interne.

Le corps (4) du filtre renferme un élément filtrant annulaire (3) à travers lequel la circulation du carburant a lieu, globalement, dans le sens radial. Des éléments chauffants sont prévus d'une part dans un tube axial (9) du corps, et d'autre part à l'intérieur d'une chambre annulaire externe (16) de ce corps. Ces éléments chauffants sont constitués, par exemple, par des résistances électriques (17) et (18).

Application : Elimination des paillettes de paraffine dans le gasoil, par temps froid.

FIG3

EP 0 045 707 A1

La présente invention concerne un filtre de type nouveau, pour le réchauffage et le filtrage simultanés du carburant injecté dans un moteur à combustion interne.

L'invention concerne plus particulièrement les moteurs Diesel, qui consomment du gasoil. Il est connu que les modes de raffinage actuels aboutissent à des qualités de gasoil à haute teneur en paraffine. La température à laquelle le gasoil commence à figer se situe entre 0°C et - 2°C, suivant la provenance du gasoil.

Etant donné que le gasoil fige à une température proche de 0°C, température extérieure assez fréquente en dehors de la saison d'été, il en résulte un accroissement des difficultés de démarrage des moteurs Diesel, ainsi que des problèmes d'alimentation en cours de fonctionnement pour les camions routiers ou les engins de travaux publics.

On a remarque que les difficultés apparaissaient en particulier lorsqu'après un séjour plus ou moins long d'un véhicule à moteur Diesel dans une atmosphère à basse température le circuit d'alimentation en gasoil contient un taux important de paillettes ou de cristaux de paraffine ayant tendance à s'agglomérer en rencontrant un barrage qu'ils ne peuvent pas franchir. Le filtre et le préfiltre du circuit de gasoil constituent deux barrages qui, du fait de leurs fonctions, engendrent un blocage dans l'écoulement du gasoil dès que les paillettes se sont accumulées devant l'élément filtrant. Il en résulte alors l'apparition d'une perte de charge ne permettant plus d'atteindre le débit d'alimentation minimum nécessaire à la pompe d'injection.

L'invention a pour but de pallier les inconvénients précités en limitant l'accumulation des paillettes de paraffine rendant les démarrages difficiles, et posant même des problèmes en cours de journée par temps froid.

Un filtre suivant l'invention, destiné au filtrage et au réchauffage du carburant avant l'injection sur un moteur à combustion interne, est muni d'un corps qui renferme un élément filtrant annulaire à travers lequel la circulation du carburant a lieu, globalement, dans le sens radial, et il est caractérisé en ce que des éléments chauffants sont prévus d'une part dans le conduit axial du corps, et d'autre part à l'intérieur de la paroi périphérique du corps.

Suivant une caractéristique supplémentaire de l'invention,

2

l'un au moins des éléments chauffants est constitué par une résistance électrique.

Suivant une caractéristique supplémentaire de l'invention, le circuit électrique d'alimentation de la résistance comprend un interrupteur thermostatique sensible à la température du carburant.

Suivant une caractéristique supplémentaire de l'invention, la résistance électrique est prévue pour être alimentée soit à partir du circuit électrique à basse tension d'un véhicule, soit à partir du secteur électrique d'un immeuble.

Suivant une variante de l'invention, l'un au moins des éléments chauffants est constitué par un serpentin en cuivre permettant la circulation dans le filtre de l'eau chaude du radiateur.

Suivant une autre variante de l'invention, l'au au moins des éléments chauffants est constitué par un serpentin en acier inoxydable permettant la circulation dans le filtre des gaz d'échappement du moteur.

Suivant une autre variante de l'invention, l'un au moins des éléments chauffants est constitué par un tube de cuivre qui traverse axialement le corps de filtre en permettant la circulation dans le filtre de l'eau chaude du radiateur.

Suivant une autre variante de l'invention, l'un au moins des éléments chauffants est constitué par un tube en acier inoxydable qui traverse axialement le corps de filtre en permettant la circulation dans le filtre des gaz d'échappement.

Le dessin annexé, donné à titre d'exemple non limitatif, permettra de mieux comprendre les caractéristiques de l'invention.

- Figure 1 est une vue latérale simplifiée d'un moteur équipé d'un filtre suivant l'invention.

- Figure 2 est une vue d'un filtre suivant l'invention, en section suivant un plan vertical, et en représentation schématique.

- Figure 3 est une section III-III (fig 4).

- Figure 4 est une section IV-IV (fig 3).

- Figure 5 est une section V-V (fig 4).

- Figure 6 est une section VI-VI (fig 7).

- Figure 7 est une section VII-VII (fig 6), en variante.

- Figure 8 est une vue en section axiale schématique d'un filtre suivant une variante de l'invention.

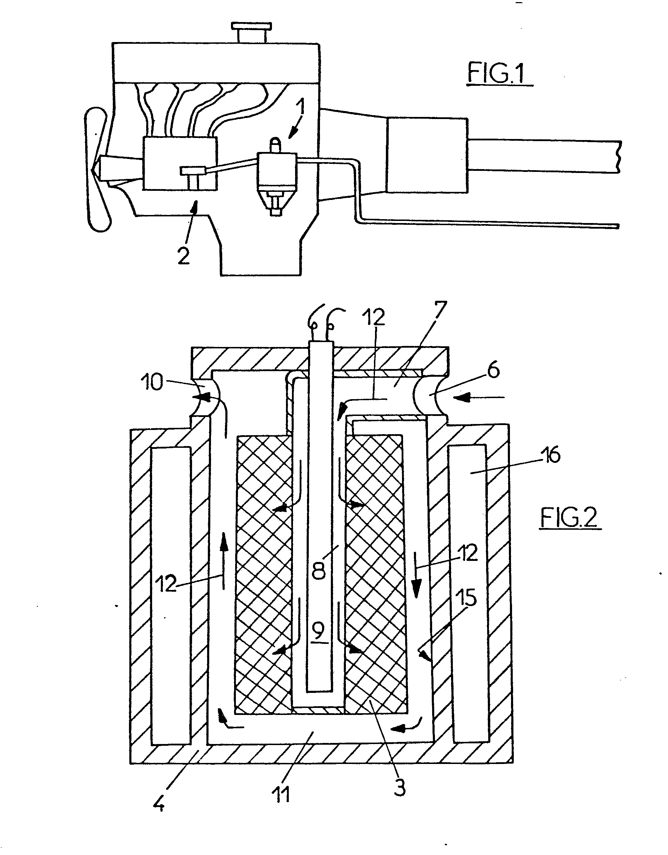

On a représenté sur la figure 1 un moteur Diesel équipé d' un filtre 1 suivant l'invention, en remplacement du préfiltre et du

filtre montés sur les systèmes d'injection de gasoil. Le filtre 1 est pourvu d'un système de raccord rapide permettant sa pose sur les canalisations entre la pompe d'injection 2 et le réservoir.

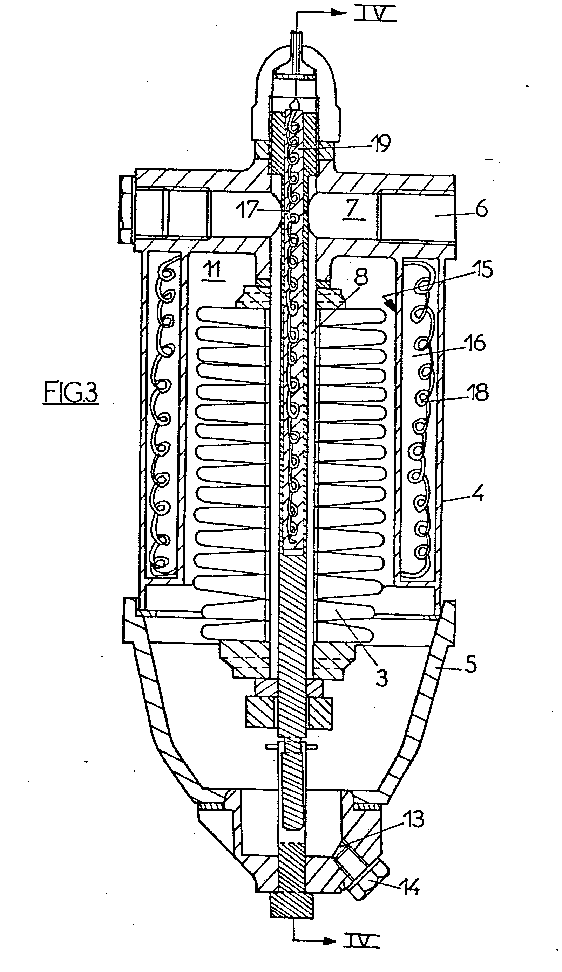

Le filtre 1 est muni d'un corps 4 qui renferme un élément filtrant annulaire 3. Cet élément filtrant est d'une finesse suffisante pour remplacer les filtres montés d'origine sur le moteur, et il peut être démonté par le bas, la cavité principale du corps 4 étant fermée par un couvercle inférieur 5 qui est de préférence en verre transparent. Il est avantageux d'avoir facilement accès à l'élément filtrant, pour procéder à son échange, pour éliminer les impuretés retenues, etc... (voir fig 3).

L'orifice d'entrée 6 du filtre s'ouvre dans un conduit radial aménagé dans le fond du corps 4, ce conduit radial 7 débouchant lui-même dans un conduit annulaire 8 délimité entre le passage cylindrique axial de l'élément filtrant 3 et un tube 9 utilisé pour assurer la fixation du couvercle 5.

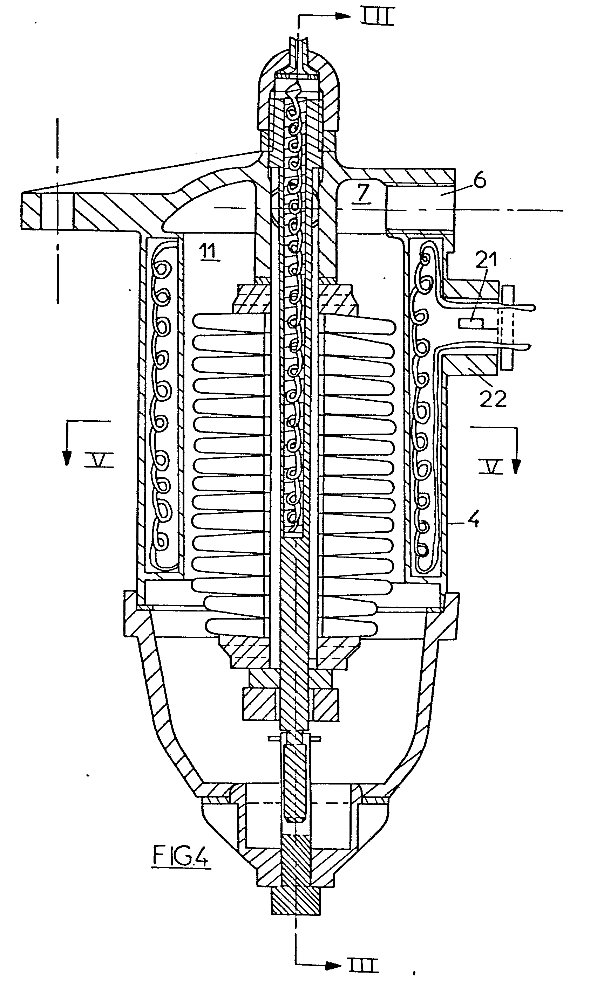

L'orifice de sortie 10 du filtre s'ouvre directement dans la cavité principale 11 du corps 4 (fig 4), dans une direction radiale décalée de 90° par rapport à l'orifice d'entrée 6.

Cette architecture d'ensemble, qui est en elle-même connue, conduit à la circulation du gasoil figurée par les flèches 12 de la figure 2.

Un orifice de vidange 13 s'ouvrant dans la cavité principale 11 au niveau du couvercle 5, et obturé en temps normal par un bouchon 14, permet l'élimination de l'eau contenue dans le circuit(fig 3). Le couvercle 5 peut également porter un orifice de dégazage non représenté et utilisé comme soupape de sécurité en cas de mauvais fonctionnement du système électrique, pour le cas où une surchauffe du gasoil entraînerait une montée en pression.

Suivant l'invention, le filtre renferme plusieurs surfaces d'échanges thermiques permettant un apport de calories au gasoil en transit entre le réservoir du véhicule et la pompe d'injection. Ces surfaces sont constituées d'une part par la surface externe du tube 9, et d'autre part par le surface cylindrique interne 15 du corps 4. Parallèlement, des éléments chauffants ont été disposés d'une part à l'intérieur du tube 9, et d'autre part dans une chambre annulaire externe 16 du corps 4. Dans le cas de l'exemple illustré sur les figures 3 à 5, ces éléments chauffants sont constitués par des résistances électriques 17 et 18. La résistance 17 est du type "crayon",

4

tandis que la résistance 18 est en spirale, ces résistances étant l'une comme l'autre noyées dans une poudre métallique très conductrice de la température 19.

On peut utiliser soit des résistances alimentées sous une tension de 24 volts, correspondant à la tension continue d'un véhicule, soit des résistances alimentées sous une tension de 220 volts, correspondant à la tension alternative du secteur électrique des habitations. Dans ce dernier cas, on a la possibilité de réchauffer le gasoil au moment du démarrage du véhicule sans décharger les batteries de celui-ci, ce qui est appréciable.

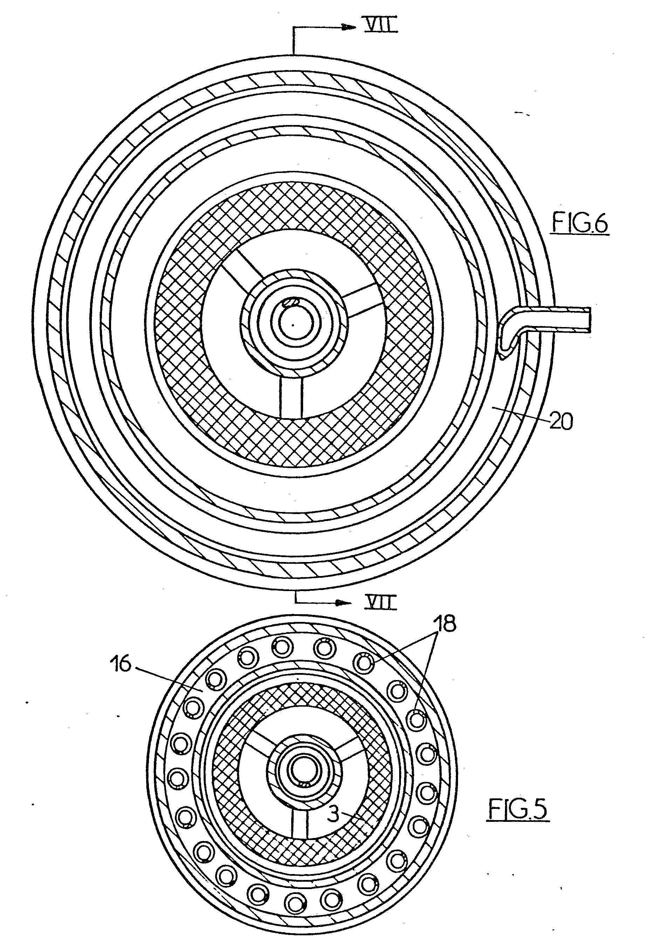

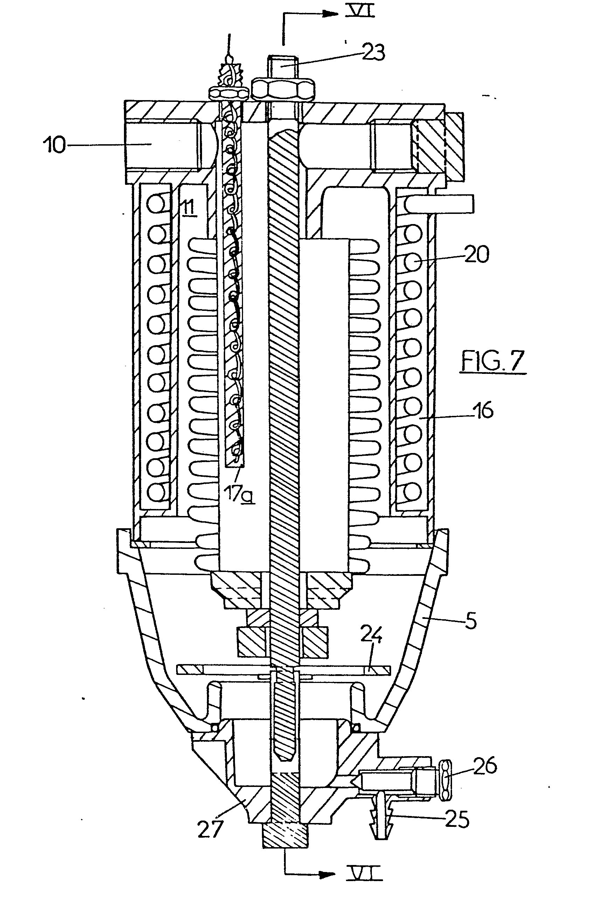

Dans le cas de l'exemple illustré sur les figures 6 et 7, l'élément chauffant placé à l'intérieur de la chambre annulaire 16 est constitué par un serpentin 20. On peut utiliser soit un serpentin en cuivre dans lequel on fait circuler le liquide du circuit de refroidissement du moteur, soit un serpentin en métal inoxydable dans lequel on fait circuler les gaz d'échappement du moteur.

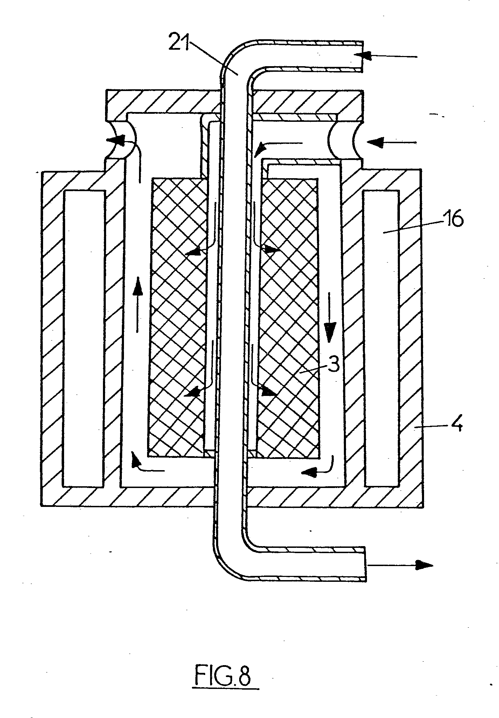

Dans le cas de l'exemple illustré sur la figure 8, l'élément chauffant placé à l'intérieur du tube 9 est constitué par un conduit 21 dans lequel on peut faire circuler soit le liquide du circuit de refroidissement, soit les gaz d'échappement.

D'une manière générale, on peut réaliser le réchauffage du filtre en combinant diverses sources de chaleur pouvant se trouver soit sur le véhicule lui-même (batterie d'accumulateurs, liquide de refroidissement, gaz d'échappement), soit à l'extérieur du véhicule (réseau électrique d'un bâtiment, etc...), certaines de ces sources étant utilisées seulement pour le démarrage, alors que les autres sont utilisées en permanence.

De préférence, on utilise en outre un thermostat 21 pour assurer une régulation de la température du gasoil à l'intérieur du corps du filtre, de façon que la température reste peu différente de 20°C, qui est une température idéale de filtrage. Le thermostat 21 peut être placé sur le côté du corps (fig 4), dans un bossage 22 utilisé pour le montage des bornes électriques de raccordement des résistances. Lorsqu'on utilise comme source de chaleur le circuit de fluide de refroidissement du moteur ou le circuit des gaz d'échappement, on remplace le thermostat électrique par une vanne thermostatique agissant sur la section de passage des fluides circulant dans les serpentins.

Le fonctionnement est le suivant :

5

Le réchauffage du gasoil permet de rendre ce dernier parfaitement filtrable, l'échauffement du gasoil au niveau du filtre étant suffisant pour permettre de supprimer complètement l'accumulation des paillettes de paraffine. Les paillettes de paraffine fondent au fur et à mesure du passage du gasoil dans le filtre, et ce aussi bien au moment du démarrage que pendant toute la durée du fonctionnement du moteur. On note que le filtre suivant l'invention agit à des températures où le gasoil est seulement figé, c'est-à-dire où il reste encore assez liquide pour pouvoir circuler dans des conduits de section relativement forte, mais où les paillettes de paraffine obstruent les pores très fines des éléments filtrants.

On ne sortirait pas du domaine de l'invention en effectuant quelques modifications de détail à partir de la même structure de base.

On peut par exemple déplacer légèrement la résistance crayon en la logeant en 17a (fig 7), à une certaine distance du tube de serrage central 23. Cette disposition facilite le démontage de ladite résistance.

On peut aussi loger à l'intérieur du couvercle 5 aménagé à cet effet une rondelle 24, de préférence de couleur vive, par exemple rouge, cette rondelle étant d'une densité intermédiaire entre l'eau et le gasoil de façon à flotter à la surface de séparation des deux liquides, pour signaler la présence d'eau.

Pour faciliter l'évacuation de l'eau, on peut prévoir une purge 25 obturable par une vis pointeau 26.

Enfin, le corps 4 de l'appareil sera de préférence en aluminium, tandis que la pièce de serrage 27 constituant la partie basse du couvercle sera en polycarbonate.

6

## REVENDICATIONS

1. Filtre destiné au filtrage et au réchauffage du carburant avant l'injection sur un moteur à combustion interne, muni d'un corps qui renferme un élément filtrant annulaire à travers lequel la circulation du carburant a lieu, globalement, dans le sens radial, caractérisé en ce que des éléments chauffants sont prévus d'une part dans un conduit axial du corps, et d'autre part, à l'intérieur de la paroi périphérique du corps.

2. Filtre suivant la revendication 1, caractérisé en ce que l'un au moins de ces éléments chauffants est constitué par une résistance électrique.

3. Filtre suivant la revendication 2, caractérisé en ce que le circuit électrique d'alimentation de la résistance comprend un interrupteur thermostatique sensible à la température du carburant.

4. Filtre suivant l'une quelconque des revendications 2 et 3, caractérisé en ce que la résistance électrique est prévue pour être alimentée soit à partir du circuit électrique à basse tension d'un véhicule, soit à partir du secteur électrique d'un immeuble.

5. Filtre suivant la revendication 1, caractérisé en ce que l'un des éléments chauffants est constitué par un serpentin en cuivre permettant la circulation dans le filtre de l'eau chaude du radiateur.

6. Filtre suivant la revendication 1, caractérisé en ce que l'un des éléments chauffants est constitué par un serpentin en acier inoxydable permettant la circulation dans le filtre des gaz d'échappement du moteur.

7. Filtre suivant la revendication 1, caractérisé en ce que l'un des éléments chauffants est constitué par un tube de cuivre qui traverse axialement le corps de filtre en permettant la circulation dans le filtre de l'eau chaude du radiateur.

8. Filtre suivant la revendication 1, caractérisé en ce que l'un des éléments chauffants est constitué par un tube en acier inoxydable qui traverse axialement le corps de filtre en permettant la circulation dans le filtre des gaz d'échappement.

FIG.1

FIG.2

PL.2/6

IV

FIG.3

19

17    7    6

11    8    15

16

18

4

3

5

13

14

IV

PL.3/6

III

6

7

11

21

22

V V

4

FIG.4

III

FIG.6

20

VII

FIG.5

18

16

3

FIG.7

FIG.8

### Office européen des brevets

### RAPPORT DE RECHERCHE EUROPEENNE

EP 81 42 0111

| DOCUMENTS CONSIDERES COMME PERTINENTS | | | CLASSEMENT DE LA DEMANDE (Int. Cl.³) |
|---|---|---|---|
| Catégorie | Citation du document avec indication, en cas de besoin, des parties pertinentes | Revendica-tion concernée | |
| | <u>US - A - 3 235 084</u> (KING) <br> * Colonne 1, lignes 9-37, 55-72; colonne 2, lignes 1-17, 37-46, 56-65 * <br><br> -- <br><br> <u>FR - A - 2 256 323</u> (ROCHETTE) <br> * Page 1, lignes 1,2; page 2, lignes 16-22, 26-38; page 3, lignes 1,2; figures 1,2 * <br><br> -- <br><br> <u>FR - A - 2 164 780</u> (LACREX) <br> * Page 1, lignes 1-4, 21-27; page 2, lignes 6-13, 17-30 * <br><br> -- <br><br> <u>FR - A - 2 177 159</u> (S.E.R.I.S.) <br> * Page 1, lignes 1-6; page 2, lignes 8-33; page 3, lignes 30-36; figures * <br><br> -- | 1-3 <br><br><br><br><br><br> 1,4 <br><br><br><br><br><br><br> 1 <br><br><br><br><br><br> 1 | F 02 M 37/22 <br> 31/12 <br> B 01 D 35/18 <br><br><br><br><br><br><br> **DOMAINES TECHNIQUES RECHERCHES (Int. Cl.³)** <br><br> F 02 M <br> B 01 D |
| A | <u>FR - A - 2 353 326</u> (EASTMAN KODAK) <br> * Page 1, lignes 1-3, 29-40; page 2, lignes 1 et 40; page 3, lignes 1-10 * <br><br> -- | 1,4 | **CATEGORIE DES DOCUMENTS CITES** <br> X: particulièrement pertinent <br> A: arrière-plan technologique <br> O: divulgation non-écrite <br> P: document intercalaire |
| A | <u>US - A - 2 635 759</u> (SCHWALGE) <br> * Colonne 2, lignes 4-38; figure 1 * <br><br> -- <br><br> ./. | 8 | T: théorie ou principe à la base de l'invention <br> E: demande faisant interférence <br> D: document cité dans la demande <br> L: document cité pour d'autres raisons <br><br> &: membre de la même famille. document correspondant |

| | Le présent rapport de recherche a été établi pour toutes les revendications | | |
|---|---|---|---|
| Lieu de la recherche <br> La Haye | Date d'achèvement de la recherche <br> 29-10-1981 | Examinateur <br> JORIS | |

OEB Form 1503.1  06.78

**Office européen des brevets**

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée |
|---|---|---|
| A | DE - A - 2 712 584 (CILLICHEMIE)<br><br>* Page 4, alinéa 1; page 6, dernier alinéa; page 9, alinéa 1 de la description; figure 1 *<br><br>-- | 5 |
| A | DE - C - 2771 (VAN HAAGEN)<br><br>* Page 1, colonne de gauche, lignes 32-40 *<br><br>-- | 1 |
| | BE - A - 668 942 (ROSAEN FILTER CY)<br><br>* Page 1, en entier; page 2, alinéas 1 et 2; page 4, alinéas 2,3,4; page 6, alinéa 3; page 8, alinéas 1,2; page 9, alinéa 2; figure 1 *<br><br>---- | 1,2,3 |

**CLASSEMENT DE LA DEMANDE (Int. Cl. 3)**

**DOMAINES TECHNIQUES RECHERCHES (Int. Cl. 3)**

OEB Form 1503.2  06.78